Europäisches Patentamt

European Patent Office

Office européen des brevets

(19)

(11) Veröffentlichungsnummer: 0 176 752
A2

(12) # EUROPÄISCHE PATENTANMELDUNG

(21) Anmeldenummer: 85110677.3

(22) Anmeldetag: 24.08.85

(51) Int. Cl.⁴: F 02 B 37/02

(30) Priorität: 01.09.84 DE 8425874 U

(43) Veröffentlichungstag der Anmeldung:
09.04.86 Patentblatt 86/15

(84) Benannte Vertragsstaaten:
DE FR GB

(71) Anmelder: Krupp MaK Maschinenbau GmbH
Falckensteiner Strasse 2-4
D-2300 Kiel 17(DE)

(72) Erfinder: Schacht, Hans-Jürgen, Dipl.-Ing.
Fischerstrasse 10
D-2303 Gettorf(DE)

(74) Vertreter: Hansmann, Dierk, Dipl.-Ing.
Jessenstrasse 4
D-2000 Hamburg 50(DE)

(54) Abgasleitung einer abgasturbo-aufgeladenen Brennkraftmaschine.

(57) Bei einem Verbindungsrohr (5) zwischen Kolbenmotor 1 und abgasgetriebenem Lader (2), bei dem der Zylinderanzahl entsprechende Kammern (7 bis 15) gebildet sind, ist vorgesehen, daß die Zwischenwände (16 bis 23) im allgemeinen s-förmig gebogen sind und an den Stoßstellen (24) mit der jeweilig aufnehmenden Rohraußenwand (25,26) nahezu senkrecht in diese einmünden.

FIG.4

## Kolbenmotor mit abgasturbinengetriebenem Lader

Die Erfindung betrifft einen Kolbenmotor mit abgasturbinengetriebenem Lader und mindestens einem abgasführenden Mehrkammer-Verbindungsrohr zwischen Motor und Laderturbine.

Da die Rohre, welche die Abgase von den Motorzylindern zur Ladeturbine leiten, wenn sie einzeln angebracht sind, sehr stark zu Schwingungen neigen, ist es schon bekannt, aus mehreren Kammern bestehende, mehrflutige Leitungen vom Motor zur Turbine zu verwenden, in denen sich die Schwingungsmehrungen ausgleichen sollen. Aber an den die einzelnen Kammern voneinander trennenden, membranartigen Zwischenwänden können bedingt durch hohe Wärme- und Biegespannungen leicht Risse auftreten, wobei die Eingangsstellen besonders gefährdet sind.

Es ist daher die Aufgabe der Erfindung, eine Mehrkammer-Verbindungsleitung zu schaffen, bei der diese nachteiligen Erscheinungen vermieden werden.

Zur Lösung dieser Aufgabe ist die Erfindung, dadurch gekennzeichnet, daß die Zwischenwände zwischen den die Verbindungsrohre bildenden Kammern im Rohrquerschnitt S-förmig gebogen sind und an den Stoßstellen mit der jeweilig aufnehmenden Rohraußenwand senkrecht in diese einmünden.

Die Außenkontur eines neuerungsgemäßen Verbindungsrohres ist dabei im Rohrquerschnitt dadurch gekennzeichnet, daß die Rohraußenwände an den Stoßstellen in Richtung auf die trennende Zwischenwand gebogen sind.

In den Zeichnungsfiguren sind Ausführungsbeispiele der Erfindung schematisch dargestellt. Es zeigen:

Fig. 1 einen Kolbenmotor mit abgasturbinengetriebendem Lader und dem Zwischenrohr in Blockdarstellung;

Fig. 2 einen Querschnitt durch ein zweiflutiges, verbindendes Zwischenrohr;

Fig. 3 einen Querschnitt durch ein dreiflutiges, verbindendes Zwishenrohr;

Fig. 4 einen Querschnitt durch ein vierflutiges, verbindendes Zwischenrohr.

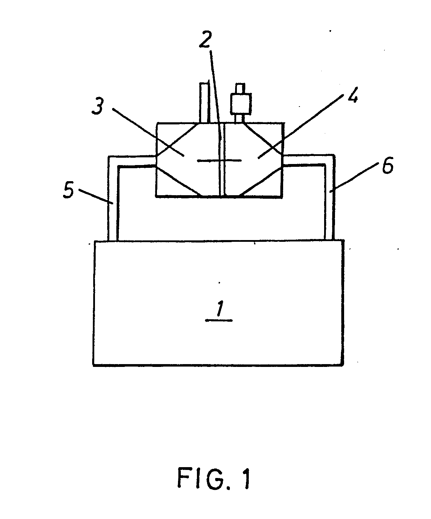

In Fig. 1 ist ein, beispielsweise nach dem Dieselprinzip arbeitender, Kolbenmotor mit 1 bezeichnet. Ein Abgasturbolader 2, der aus einem durch die Motorenabgase getriebenem Turbinenteil 3 als Kraftmaschine und einem mit ihm gekuppelten Frischluft fördernden Laderteil 4 als Arbeitsmaschine besteht, ist einerseits mit seinem Turbinenteil 3 über eine erste, Abgase führende, Verbindungsleitung 5 und andererseits mit seinem Laderteil 4 über eine vorverdichtete Frischluft führende, zweite Verbindungsleitung 6 an den Motor 1 angeschlossen. Vom Turbolader gehen noch eine Ansaugleitung mit Luftfilter und eine Auspuffleitung aus. Da die Abgasrohre, wenn sie einzeln angebracht sind, sehr leicht zu Schwingungen angeregt werden, ist man dazu übergegangen, sie mehrflutig, d.h. als Mehrkammerleitungen, auszuführen. Die bisher üblichen Mehrkammerleitungen zeigen jedoch an ihren inneren membranartigen Zwischenwänden sehr schnell Risse, weil dort besonders an ihren Eingangsstellen hohe Wärme- und Biegespannungen auftreten.

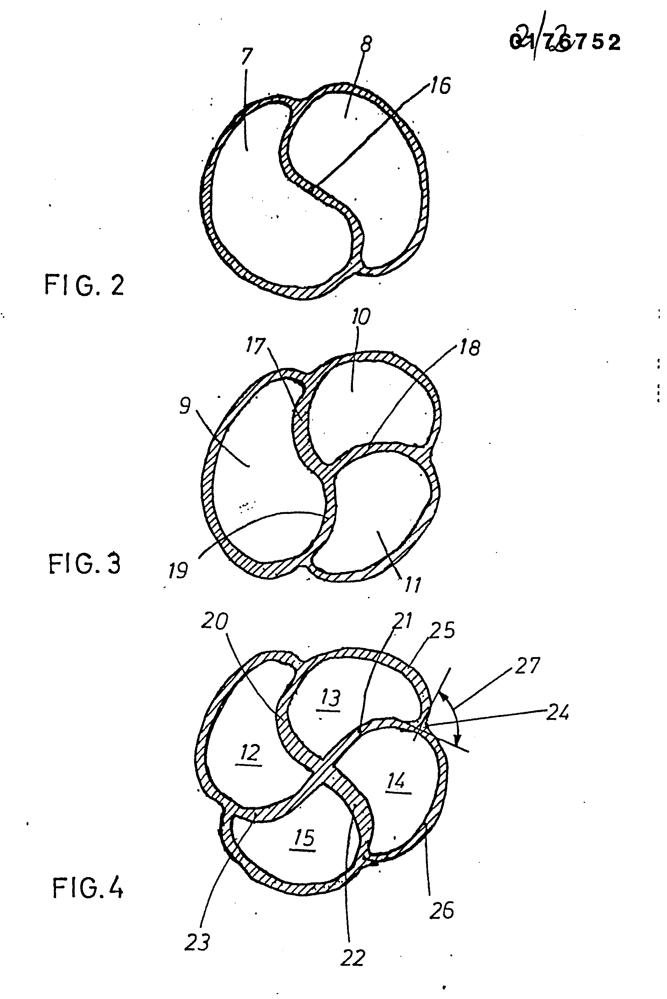

Die Fig. 2, 3 und 4 zeigen nun erfindungsgemäß Lösungen für die vorerwähnten Schwierigkeiten bei im Querschnitt dargestellten zwei-, drei- und vierflutigen Verbindungsleitungen 5, wobei die abgasführenden Kammern in Fig. 2 mmit 7, 8, in Fig. 3 mit 9,10,11 und in Fig. 4 mit 12,13,14 und 15 bezeichnet sind. Die Kammern sind durch Zwischenwände 16 (Fig. 2),17,18,19 (Fig.3) und 20,21,22 und 23 (Fig.4) voreinander getrennt. Gemäß der Neuerung sind diese Zwischenwände 16 bis 23 in den Fig. 2 bis 4 S-förmig gebogen, wodurch Biegeschwingungen unschädlich gemacht werden und Wärmespannungen sich besser ausgleichen können. Außerdem gehen die Zwischenwände, z.B. 21, und die Rohraußenwände, z.B. 25,26, nahezu rechtwinklig in die Stoßstellen, z.B. 24, über, wodurch Materialanhäufung und Lunkerbildung, gegebenenfalls Dauerbrüche verursachende Kerben vermieden werden, was durch den rechten Winkel 27 angedeutet ist. Hierdurch ergibt sich als weiteres Merkmal, daß die Kontur der Rohraußenwände an den Stoßstellen mit den Zwischenwänden gebogen ist.

Patentansprüche

1. Kolbenmotor mit abgasturbinengetriebenem Lader und mindestens einem aus mehreren einer Zyinderanzahl entsprechenden, sich in Rohrlängsrichtung erstreckenden Kammern bestehenden, abgasführenden Verbindungsrohr zwischen Motor und Laderturbine, dadurch gekennzeichnet, daß die Zwischenwände (16,17,18,19,20,21,22,23) zwischen den Verbindungs rohre (5) bildenden Kammern (7,8,9,10,11,12, 13,1444,15) im Rohrquerschnitt im allgemeinen S-förmig gebogen sind und an den Stoßstellen (24) mit der jeweilig aufnehmenden Rohraußenwand (25, 26) nahezu senkrecht in diese einmünden.

2. Kolbenmotor nach Anspruch 1, dadurch gekennzeichnet, daß die Außenwand (25) des Verbindungsrohres (5) an den Stoßstellen (24) mit den zwei nebeneinanderliegenden Kammern (13,14) trennenden Zwischenwand (21) in der Richtung auf diese gebogen ist.

1/2

FIG. 1

FIG. 3

FIG. 4